# EUROPÄISCHE PATENTSCHRIFT

(11) **EP 2 749 862 B1**
(45) Veröffentlichungstag und Bekanntmachung des Hinweises auf die Patenterteilung: **02.03.2016**
(21) Anmeldenummer: 13005444.8
(22) Anmeldetag: 20.11.2013
(51) Int. Cl.: G01M 5/00, G01M 13/02

(54) **Testvorrichtung für an Dreipunkt-Kraftheber anzuhängende, achslose Anbaugeräte**
Test device for axle-less attachments attached to a three point power lift
Dispositif de test pour accessoires sans axe à suspendre au systeme de levage à trois points

(30) Priorität: 28.12.2012 DE 102012025221
(43) Veröffentlichungstag der Anmeldung: 02.07.2014
(73) Patentinhaber: CFM Schiller GmbH, 52159 Roetgen (DE)
(72) Erfinder: Wolfgang, Peters, 4730 Raeren (BE); Bertel, Dirk Oliver, 52224 Vennwegen (DE)
(74) Vertreter: Cohausz Hannig Borkowski Wißgott

(56) Entgegenhaltungen:
- DE-A1-102005 053 325
- JP-A- S59 164 940
- US-A- 5 610 330

## Beschreibung

Die Erfindung betrifft eine Testvorrichtung für an Dreipunkt-Kraftheber anzuhängende, achslose Anbaugeräte, insbesondere für landwirtschaftliche Anbaugeräte für Traktoren, die einen bewegbaren Prüfkörper aufweist, mit dessen Bewegung die Fahrtbewegungen einer Zugmaschine, insbesondere eines Traktors simulierbar sind, wobei der Prüfkörper drei Aufnahmeelemente aufweist, die in der geometrischen Konfiguration eines Dreipunkt-Krafthebers angeordnet sind und an die ein zu testendes Anbaugerät mit einem zu einem Dreipunkt-Kraftheber korrespondierendem Kupplungsbereich, insbesondere einem A-Rahmen freihängend befestigbar ist und im angehängten Zustand der Prüfkörper durch wenigstens drei Aktoren (3) in mehreren Freiheitsgraden bewegbar ist.

Im Stand der Technik ist es bekannt, an Zugmaschinen, wie beispielsweise Traktoren Anbaugeräte anzubringen, wobei sich im Stand der Technik weiterhin hierfür der sogenannte Dreipunkt-Kraftheber etabliert hat, insbesondere der im wesentlichen derart ausgebildet ist, dass zwei untere Fanghaken auf einer gemeinsamen Achse angeordnet sind und ein darüber liegender Fanghaken vorgesehen ist, so dass ein an eine Zugmaschine anzuhängendes Anbaugerät in diese drei Fanghaken eingekuppelt werden kann und so, insbesondere wenn es als achsloses Anbaugerät ausgebildet ist, freihängend an der Zugmaschine befestigt werden kann.

Durch eine Bewegung der Fanghaken eines solchen Dreipunkt-Krafthebers relativ zueinander kann dabei in üblicher Weise der Anstellwinkel des Anbaugerätes gegenüber der Zugmaschine, wie beispielsweise einem Traktor variiert werden, beispielsweise um das Anbaugerät in eine Arbeitsstellung zu bringen oder aber auch in eine Stellung, um das Anbaugerät außerhalb der Arbeitsstellung durch den Straßenverkehr zu transportieren.

Um Anbaugeräte für solche Zugmaschinen, wie beispielsweise Traktoren zu testen, werden bislang im Stand der Technik im Wesentlichen reale Testfahrten durchgeführt, um zu testen, wie sich das Anbaugerät während verschiedener Fahrbedingungen verhält, beispielsweise aufschwingt oder genügend gedämpft ist oder Instabilitäten aufweist.

Problematisch ist es hierbei, dass solche Testfahrten real durchgeführt werden müssen und darüber hinaus Messvorrichtungen zum Ausmessen des Verhaltens der Anbaugeräte, wie beispielsweise Schwingungs- oder Beschleunigungssensoren, jeweils mitgeführt werden müssen.

Die Publikation JP S59 164940 A zeigt eine Testvorrichtung unter Einsatz eines realen Traktors, der mittels eines Schwingtisches mit nur einem Freiheitsgrad in Bewegung versetzt wird, um eine Fahrt zu simulieren und dabei angehängte Anbaugeräte zu testen. Die Publikation US 5 610 330 A zeigt ebenso die Verwendung eines realen KFZ auf einer Vorrichtung zur Simulation einer Straße. Auch die Publikation DE 10 2005 053 325 beschreibt die Simulation statischer oder dynamischer Wirkungen auf eine Realstruktur, wie beispielsweise einer Karosserie.

Es ist daher die Aufgabe der Erfindung eine Testvorrichtung bereitzustellen, mittels der die Möglichkeit besteht, ohne das Durchführen realer Testfahrten und ohne Verwendung einer Zugmaschine, Anbaugeräte, insbesondere achslose Anbaugeräte für Zugmaschinen, beispielsweise Traktoren testen zu können, insbesondere unter simulierten Bedingungen, so dass beispielsweise solche simulierten Testfahrten auch innerhalb einer Halle durchgeführt werden können, in der die Infrastruktur zum Testen der Anbaugeräte, wie beispielsweise Steuergeräte, Computer, Messsensoren, etc. lokal vorgehalten werden können.

Diese Aufgabe wird erfindungsgemäß dadurch gelöst, dass der Prüfkörper durch einen Hohlkörper aus einer Vielzahl von mehr als sechs Facettenflächen ausgebildet ist, der eine Zugmaschine simuliert, wobei zumindest die Oberfläche des Prüfkörpers gewölbt und aus mehreren Facettenflächen ausgebildet ist, die unter Winkeln größer als 90 Grad ineinander übergehen.

Der wesentliche Kerngedanke bei der erfindungsgemäßen Realisierung einer Testvorrichtung ist es, durch den Prüfkörper, der durch wenigstens drei Aktoren in mehreren Freiheitsgraden bewegbar ist, die Fahrtbewegung einer Zugmaschine zu simulieren, wofür es vorgesehen sein kann, die drei Aktoren mittels wenigstens eines Steuergerätes derart anzusteuern, dass der Prüfkörper genau so bewegt wird, wie sich eine Zugmaschine bewegen würde, wenn sie real auf der Straße, einem Acker oder einer sonstigen Umgebung fahren würde.

Erfindungsgemäß weist der Prüfkörper drei Aufnahmeelemente auf, an die ein Anbaugerät angehängt werden kann, so dass es an diesen drei Aufnahmeelementen befestigt ist, als würde es freihängend an einer Zugmaschine hängen. Dabei können die Aufnahmeelemente selbst Fanghaken ausbilden oder vorgesehen sein, um solche daran zu befestigen.

Es kann demnach das zu testende Anbaugerät durch die Bewegung des Prüfkörpers so bewegt werden, wie es sich bei einer realen Fahrt bewegen würde, so dass das Verhalten des Anbaugerätes durch Simulation überprüft werden kann.

Hierbei kann es beispielsweise vorgesehen sein, am Anbaugerät oder an dem Prüfkörper Sensoren vorzusehen, mit denen die Schwingungen und oder Beschleunigungen, Verkippungen oder sonstige Lageänderungen des Anbaugerätes oder des Prüfkörpers erfasst werden können. Beispielsweise kann so die Lagestabilität eines Anbaugerätes beziehungsweise einer Gesamtanordnung aus Zugmaschine und Anbaugerät in verschiedenen Fahrsituationen geprüft werden, beispielsweise auf resonanzerhöhtes Verhalten, Schwerpunktverlagerungen oder sonstige Gefahrensituationen.

Eine vorteilhafte Ausgestaltung kann es hier vorsehen, dass der Prüfkörper, der im Wesentlichen eine Zugmaschine, beispielsweise einen Traktor simuliert, durch die wenigstens drei Aktoren in Schwerkraftrichtung unterstützt ist, wobei diese drei Aktoren beispielsweise an Anlenkstellen des Prüfkörpers, insbesondere an dessen Unterfläche angeordnet sein können, die in einer geometrischen Dreieckskonfiguration zueinander am Prüfkörper, insbesondere auf der Unterfläche angeordnet sind, beispielsweise in der Konfiguration eines gleichseitigen Dreieckes, so dass durch zwei Aktoren, beispielsweise die entlang einer kurzen Seite des Dreieckes angeordnet sind, die Hinterachsbewegung einer Zugmaschine beispielsweise eines Traktors simuliert werden kann.

Die wenigstens drei Aktoren, die in Schwerkraftrichtung unter einem Prüfkörper angeordnet sind, können beispielsweise als Linearmotoren ausgebildet sein, die beispielsweise hydraulisch, pneumatisch oder elektrisch angesteuert sind und zum Beispiel in ihrer Längserstreckungsrichtung in vertikaler Richtung ausgerichtet sind. So können durch unterschiedliche Ausfahrlängen der wenigstens drei Linearmotoren im Wesentlichen beliebige Lagen des Prüfkörpers im Raum eingestellt werden. Beispielsweise kann so ein Nicken und Neigen einer Zugmaschine nachgebildet werden.

Die drei Aktuatoren können sich beispielsweise zwischen einer Unterfläche des Prüfkörpers, insbesondere einer horizontalen Unterfläche des Prüfkörpers und einer darunter angeordneten Grundplatte der gesamten Testvorrichtung erstrecken und durch Ansteuerung mittels wenigstens eines Steuergerätes unterschiedlich angetrieben sein.

Da durch das Anhängen von achslosen Anbaugeräten, die somit freihängend am Prüfkörper angeordnet sind, erhebliche Kräfte und/oder Biegemomente beziehungsweise Drehmomente auf den Prüfkörper einwirken, insbesondere wenn dieser aktiv bewegt wird, bedarf es einer besonders stabilen Ausführung eines Prüfkörpers, damit dieser die simulierten Fahrbewegungen ausführen kann, ohne selbst durch die angehängte Last eines Anbaugerätes Schaden zu nehmen.

Hierfür ist es erfindungsgemäß vorgesehen, dass der Prüfkörper als Hohlkörper ausgebildet ist, insbesondere hierdurch ein besonders geringes Gewicht aufweist, wobei eine bevorzugte Weiterbildung vorsehen kann, dass der Hohlkörper im Inneren verrippt ausgebildet ist, das heißt, dass sich rippenförmige Versteifungen oder Verstrebungen zwischen den Innenwandungen des Hohlkörpers erstrecken. Beispielsweise kann im Inneren des Prüfkörpers eine Wabenstruktur vorgesehen sein.

Erfindungsgemäß wird eine besondere Steifigkeit des Prüfkörpers mit hoher Lastabtragungswirkung ergänzend dadurch erreicht, dass der Prüfkörper eine obere Oberfläche aufweist, die eine Wölbung, insbesondere eine nach außen gerichtete konkave Wölbung im Vergleich zu einer gedachten horizontal ausgerichteten Ebene bzw. der Unterfläche des Prüfkörpers aufweist, wobei die Wölbung dadurch erzielt ist, dass die obere Oberfläche des Prüfkörpers facettiert ausgebildet ist aus mehreren Teilflächen, insbesondere die in solcher Weise geneigt zueinander angeordnet sind, dass die aus den einzelnen Teilflächen zusammengesetzte facettierte Oberfläche diese eingangs genannte Wölbung gegenüber einer gedachten horizontalen Ebene aufweist. Hierfür können die Teilflächen Normalenvektoren aufweisen, die zwischen der Vertikalen (einschließlich) und der Horizontalen (ausschließlich liegen).

Hierbei kann die Konstruktion weiterhin derart ausgeführt werden, dass die obere facettierte Oberfläche oder allgemein eine mit einer nach außen weisenden Ausbauchung versehene Oberfläche an ihrem äußeren Rand in mehrere, insbesondere mehr als vier senkrechte Umfangsflächen übergeht. Bei einer solchen Ausführung kann demnach der Prüfkörper eine äußere Gesamtumfangsfläche aufweisen, aus mehreren insbesondere mehr als vier senkrechten einzelnen Umfangsflächen, so dass es bei einem solchen Prüfkörper einen horizontalen Schnitt gibt, dessen Querschnittsform mehreckig, insbesondere mehr als viereckig ausgebildet ist. Auch eine solche Ausführung führt in einer gedachten Horizontal-Ebene zu einer größeren Steifigkeit als diese ansonsten bei einer üblichen viereckigen Querschnittsform gegeben wäre. Es kann hier in weiterer bevorzugter Ausführungsform vorgesehen sein, dass eines der drei Aufnahmeelemente auf der insbesondere gewölbten Oberfläche, insbesondere der facettiert gewölbten Oberfläche des Prüfkörpers angeordnet und hierbei beispielsweise, sofern eine solche Facettierung vorgesehen ist, auf einer Teilfläche der facettierten Oberfläche, die ihrerseits horizontal ausgerichtet ist.

Weiterhin kann es hier vorgesehen sein, dass dieses eine Aufnahmeelement unterschiedliche Montagehöhen für einen Oberlenker bereitstellen kann, beispielsweise dadurch, dass dieses eine Aufnahmeelement mit unterschiedlichen austauschbaren Adapterelementen, insbesondere Adapterplatten bestückt werden kann, die Befestigungsmöglichkeiten in den unterschiedlichen Montagehöhen bereitstellen, beispielsweise um hier einen Fanghaken für den Oberlenker in unterschiedlichen Montagehöhen anzuordnen. Lediglich durch den Austausch der Adapterelemente kann demnach der Prüfkörper der Testvorrichtung an die unterschiedlichen Montagehöhen des Oberlenkers von zu prüfenden Anbaugeräten angepasst werden.

Weiterhin kann die Erfindung vorsehen, dass zwei der drei Aufnahmeelemente, insbesondere welche einem Unterlenker zugeordnet sind, auf einer gemeinsamen Umfangsfläche, das heißt, einer gemeinsamen Teilumfangsfläche der Gesamtumfangsfläche angeordnet sind.

Unabhängig von dieser zuvor genannten bevorzugten Platzierung kann es vorgesehen sein, dass zwei der drei Aufnahmeelemente, insbesondere welche einem Unterlenker zugeordnet sind, in Ihrem horizontalen Abstand zueinander einstellbar sind, beispielsweise dadurch, dass sie in einer gemeinsamen oder jeweils in einer eigenen eine horizontale Verschiebung und eine Befestigung, z.B. Klemmung zulassenden Führungsschiene angeordnet sind.

Beispielsweise können die Aufnahmeelemente und die Führungsschiene durch eine Schwalbenschwanzverbindung aneinander angeordnet sein oder mittels T-Nuten.

Auch hierbei ergibt sich durch die horizontale Verschiebbarkeit der zwei genannten Aufnahmeelemente, insbesondere der zwei unteren der insgesamt drei Aufnahmeelemente die Möglichkeit, alle Aufnahmeelemente, die mit einem Dreipunkt-Kraftheber korrespondieren sollen, in unterschiedlichen geometrischen Abständen zueinander anzuordnen und hierdurch die verschiedenen Kategorien von Dreipunkt-Krafthebern, insbesondere von der Kategorie 0 bis 4 zu realisieren.

Um eine Stabilität des Prüfkörpers in der Testvorrichtung bei simulierten Bewegungen sicherzustellen, kann es darüber hinaus weiterhin vorgesehen sein, dass die durch die mehr als vier senkrechte Umfangsflächen ausgebildete Gesamtumfangsfläche des Prüfkörpers in zumindest einem Teilbereich einen zum Prüfkörper facettiert konkaven Bereich ausbildet, beidseits dem Anlenkstellen für in der Testvorrichtung zumindest im wesentlichen horizontal ausgerichtete Haltestangen und/oder Linearantriebe vorgesehen sind, insbesondere die sich im Betrieb der Vorrichtung zwischen jeweils einer Anlenkstelle und einer zum Prüfkörper im Abstand angeordneten Haltesäule erstrecken. Auch diese facettiert konkave Ausbildung des Umfangsteilbereiches führt zu einer erhöhten Stabilisation des Prüfkörpers im Bereich der Anlenkstellen, der Haltestangen beziehungsweise Linearaktoren in einer horizontalen Ebene.

Ein Prüfkörper gemäß der Erfindung weist gegenüber einer geometrisch üblichen Quaderform mit 6 Flächen eine Vielzahl von mehr als 6 Teilflächen, insbesondere Facettenflächen auf. Hierbei ist zumindest die Oberfläche, bevorzugt auch eine Unterfläche gewölbt und aus mehreren Facettenflächen ausgebildet, die unter Winkeln größer als 90 Grad ineinander übergehen. Unter der Unterfläche oder Oberfläche des Prüfkörpers wird jeweils die Gesamtheit aller Teilflächen verstanden, deren Ebene von der Senkrechten abweicht. Die senkrechten Teilflächen des Prüfkörpers bilden (seitliche) Umfangsflächen, insbesondere die den Prüfkörper vollständig in einer Umfangsrichtung umgeben.

Ausführungsbeispiele der Erfindung werden anhand der nachfolgenden Figuren näher beschrieben.

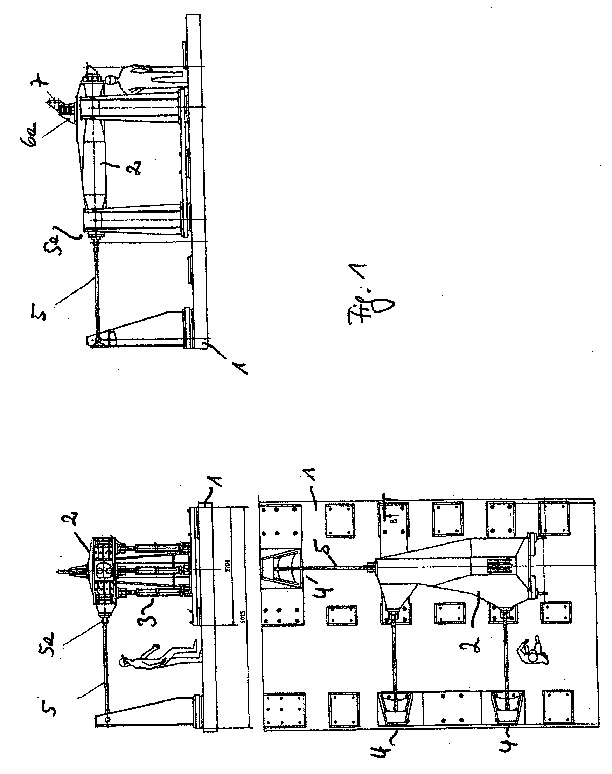

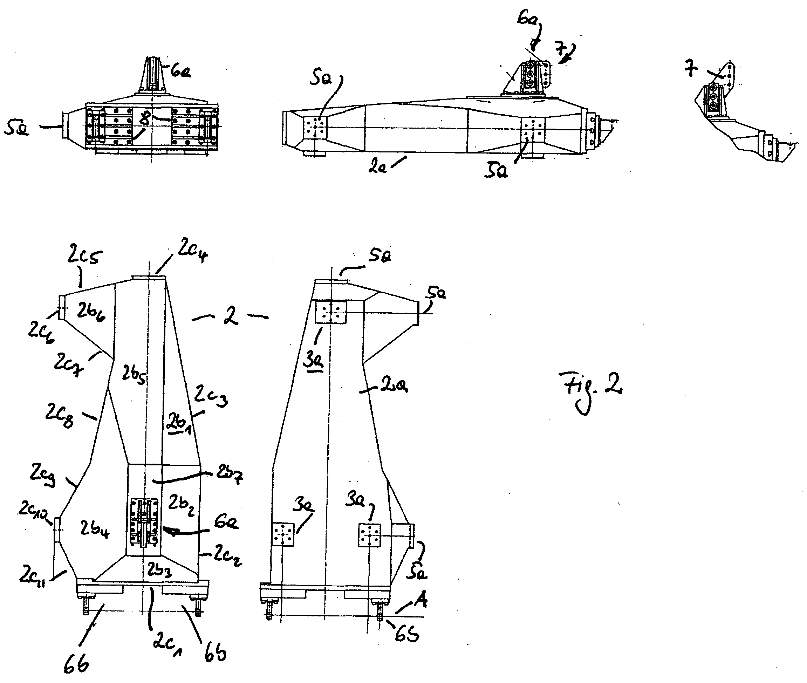

Die Figuren 1 zeigen insgesamt eine Testvorrichtung und die Figuren 2 den Prüfkörper der Testvorrichtung. Die Testvorrichtung hat eine unteren Grundplatte 1 und einen über der Grundplatte 1 aufgehängten Prüfkörper 2, wobei dieser Prüfkörper im vorgenannten Fall durch drei Linearaktoren 3 in Schwerkraftrichtung unterstützt ist, das heißt dass sich die Linearaktoren 3 in dieser Schwerkraftrichtung zwischen der Grundplatte 1 und dem Prüfkörper 2 erstrecken.

Die Unteransicht des durch die Linearaktoren 3 aufgehängten Prüfkörpers 2 zeigt, dass deren Anlenkstellen 3a auf einer hier horizontal planen Unterfläche 2a des Prüfkörpers 2 in einer Dreieckskonfiguration zueinander angeordnet sind, insbesondere in der Konfiguration eines gleichschenkligen Dreiecks, wobei zwei der Linearaktoren 3 die durch die kurze Seite des gedachten Dreieckes verbunden sind, die Hinterachsbewegung einer Zugmaschine beispielsweise eines Traktors durch Bewegen des Prüfkörpers 2 simulieren können.

Eine in der vorderen Spitze des Dreiecks angeordnete Anlenkstelle 3a ist mit einem der drei Linearaktoren 3 verbunden, welcher der Front einer Zugmaschine beziehungsweise eines Traktors zugeordnet ist und somit das Nicken eines Traktors der Vorderachse gegenüber der Hinterachse durch Relativbewegungen zwischen den Linearaktoren 3 ebenso simuliert werden kann.

Durch eine hier nicht weiter dargestellte Steuervorrichtung können die Linearaktoren 3 jeweils angesteuert werden, um die Fahrtbewegung einer Zugmaschine beispielsweise eines Traktors im beliebigen Gelände nachzubilden.

Zur Stabilisierung des Prüfkörpers 2 ist dieser, insbesondere im Wesentlichen in der Höhe seiner horizontalen Mittenebene über in dieser Ausführung drei Anlenkstellen 5a und mittels Haltestangen 5, die auch gegen Linearaktoren jeweils ausgetauscht werden können, mit Säulen 4 verbunden, die den Prüfkörper 2 umgeben. Die jeweiligen Haltestangen 5 können beispielsweise durch sphärische Gelenke an den Anlenkstellen 5a des Prüfkörpers 2 beziehungsweise der Säulen 4 befestigt sein, so dass die Bewegung in den verschiedenen Freiheitsgraden des Prüfkörpers 2 durch diese Haltestangen 5 nicht, zumindest nicht wesentlich, beschränkt wird.

Die wesentliche erfindungsgemäße Ausgestaltung des Prüfkörpers 2 ist weiterhin derart, dass dieser Prüfkörper als Hohlkörper ausgebildet ist und die Oberfläche 6 des Prüfkörpers, insbesondere getrennt durch mehrere senkrecht stehende Teilflächen 2c1 bis 2c11, welche eine gesamte Umfangsfläche 2c bilden, der horizontalen Unterfläche 2a gegenüberliegt.

Diese Oberfläche des Prüfkörpers 2 ist vorliegend gegenüber der in einer horizontalen Ebene plan ausgebildeten Unterfläche 2a gewölbt, was vorliegend dadurch realisiert ist, dass eine gewölbte Facettierung der Oberfläche aus mehreren Facettenteilflächen 2b1 bis 2b7 realisiert ist. Hierdurch wird eine besondere Steifigkeit der Oberfläche des Prüfkörpers 2 realisiert, die notwendig ist, da auf dieser gegenüber der Unterfläche 2a nach außen gewölbten Oberfläche 2b ein oberes Aufnahmeelement 6a angeordnet ist, insbesondere auf einer horizontalen Facettenfläche 2b7, die somit parallel zur horizontalen Unterfläche 2a angeordnet ist.

Eine Ansicht des Prüfkörpers 2 zeigt, dass das Aufnahmeelement 6a verschiedene Adapterplatten 7 umfassen kann, mit denen unterschiedliche Höhenlagen eines Oberlenkers einer Dreipunkt-Kraftheberanordnung realisiert werden können.

Für die Aufnahme der Unterlenker eines aufzunehmenden Anbaugerätes ist es hier vorgesehen, an einer gemeinsamen senkrecht ausgerichteten Teilfläche 2c1 von mehreren Teilflächen 2c1 bis 2c11 der Gesamtumfangsfläche 2c Aufnahmeelemente 6b vorzusehen, die auf einer gemeinsamen Achse A angeordnete Fanghaken aufweisen, wobei diese Aufnahmeelemente im horizontalen Abstand entlang der Achse A zueinander einstellbar sind, dadurch dass sie in Schienen 8 in horizontaler Richtung zueinander verstellbar sind. So lassen sich durch die unterschiedlich einstellbaren Höhenlagen im oberen Aufnahmeelement 6a und die unterschiedlichen horizontalen Abstände in den einem Unterlenker zugeordneten Aufnahmeelementen 6b die verschiedenen Kategorien von Dreipunkt-Krafthebern an Zugmaschinen beziehungsweise Traktoren 1 einstellen und somit die unterschiedlichen Anbaugeräte freihängend an den Prüfkörper 2 anhängen.

Die hier dargestellten Figuren zeigen die Testvorrichtung jeweils ohne angehängte Anbaugeräte, es ist jedoch ersichtlich, dass diese über der Grundplatte 1 freihängend schweben und durch Ansteuerung der Linearaktoren 3 der Prüfkörper 2 bewegt werden kann, um eine Fahrbewegung zu simulieren, die sodann auf das angehängte Anbaugerät übertragen wird, so dass dieses Anbaugerät in seinem Fahrverhalten in verschiedenen simulierten Fahrsituation überprüft werden kann.

Insbesondere die vertikale Unter- und Aufsicht des Prüfkörpers 2 zeigt, dass zwischen den die gesamte Umfangsfläche 2c bildenden Teilumfangsflächen 2c6 bis 2c10 ein konkaver facettierter Umfangsflächenbereich aus den jeweils senkrecht angeordneten Teilflächen 2c7, 2c8 und 2c9 ausgebildet ist, beidseits denen zwei Anlenkstellen 5a angeordnet sind, um die eingangs beschriebenen Haltestangen 5 oder alternativ auch weitere Linearantriebe aufzunehmen. Auch durch diese konkave Ausbildung der Umfangsfläche zwischen den Anlenkstellen 5a wird eine erhöhte Stabilität des Prüfkörpers 2 erzielt.

Aus den figürlichen Darstellungen der Testvorrichtung wird deutlich, dass die Möglichkeit besteht, mittels des Prüfkörpers 2 eine Zugmaschine beziehungsweise einen Traktor und dessen Dreipunkt-Kraftheber sowie die Bewegungen beim Fahren zu simulieren und so die Reaktion von angehängten Anbaugeräten zu testen, insbesondere auch messtechnisch zu erfassen, wofür entsprechende Sensoren an der Testvorrichtung, insbesondere am Prüfkörper oder den Aktoren oder aber auch an dem angehängten Anbaugerät vorgesehen sein können.

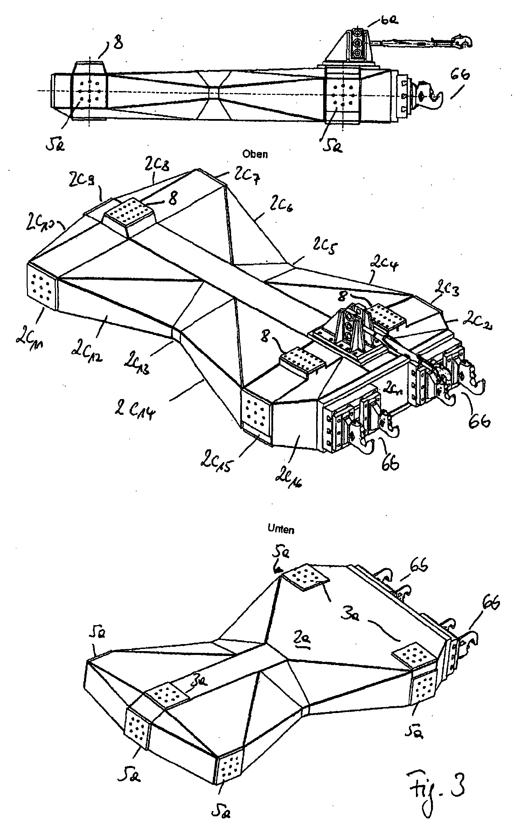

Die Figuren 3 zeigen eine alternative Ausführungsform eines erfindungsgemäßen Prüfkörpers 2. Im Wesentlichen unterscheidet sich dieser Prüfkörper von demjenigen der Figuren 1 und 2 darin, dass der Prüfköper bezüglich einer gedachten senkrechten Mittenebene parallel zur Längserstreckungsrichtung spiegelsymmetrisch ist. Es ergeben sich somit beidseits der Mittenebene jeweils ein konkaver senkrechter Umfangsflächenbereich, nämlich durch die Umfangsflächen 2c3 bis 2c7 und auf der anderen Seite durch 2c11 bis 2c15. Beidseits dieser jeweiligen konkaven Bereiche sind auf deren Endflächen, d.h. 2c3, 2c7, 2c11 und 2c15 Anlenkstellen 5a vorgesehen, um Haltestangen oder Linearmotoren anzubinden, insbesondere über sphärische Gelenke.

Eine Weiterbildung dieses Prüfkörpers, die auch bei dem der Figuren 1 und 2 sowie sonstigen nicht gezeigten Prüfkörpern realisiert sein kann , sieht vor, dass auf der oberen Oberfläche und hier bevorzugt auf horizontalen Teilflächen der oberen Oberfläche zusätzliche Befestigungsplattformen 8 angeordnet sind, an denen Zusatzbauelemente, insbesondere solche, die mit einem zu testenden Anbaugeräte funktional zusammenhängen, befestigbar sind.

Aufgrund der Symmetrie weist der Prüfkörper in Aufsicht von oben oder unten eine Taillierung auf. Diese Ausführungsform verdeutlich auch noch deutlicher, dass die obere Oberfläche als auch die untere Oberfläche bzw. Unterfläche des Prüfkörpers 2 nach außen ausgebaucht ausgebildet sein, kann, wobei jede der bauchigen Flächen sich aus einer Vielzahl von Teilflächen / Facettenflächen ergibt, die unter einen Winkel größer als 90 Grad ineinander übergehen.

## Patentansprüche

1. Testvorrichtung für an Dreipunkt-Kraftheber anzuhängende, achslose Anbaugeräte, insbesondere landwirtschaftliche Anbaugeräte für Traktoren, die einen bewegbaren Prüfkörper (2) aufweist, mit dessen Bewegung die Fahrtbewegungen einer Zugmaschine, insbesondere eines Traktors simulierbar sind, wobei der Prüfkörper (2) drei Aufnahmeelemente (6a, 6b) aufweist, die in der geometrischen Konfiguration eines Dreipunkt-Krafthebers angeordnet sind und an die ein zu testendes Anbaugerät mit einem zu einem Dreipunkt-Kraftheber korrespondierendem Kupplungsbereich, insbesondere einem A-Rahmen freihängend befestigbar ist und im angehängten Zustand der Prüfkörper (2) durch wenigstens drei Aktoren (3) in mehreren Freiheitsgraden bewegbar ist, **dadurch gekennzeichnet, dass** der Prüfkörper (2) durch einen Hohlkörper aus einer Vielzahl von mehr als sechs Facettenflächen ausgebildet ist, der eine Zugmaschine simuliert, wobei zumindest die Oberfläche des Prüfkörpers (2) gewölbt und aus mehreren Facettenflächen (2b1, 2b2, 2b3,...) ausgebildet ist, die unter Winkeln größer als 90 Grad ineinander übergehen.

2. Testvorrichtung nach Anspruch 1, **dadurch gekennzeichnet, dass** der Prüfkörper (2) durch die wenigstens drei Aktoren (3) in Schwerkraftrichtung unterstützt ist, insbesondere wobei die Aktoren (3) durch in vertikaler Richtung ausgerichtete hydraulische, pneumatische oder elektrische Linearmotoren (3) ausgebildet sind, die sich zwischen einer Unterfläche (2a) des Prüfkörpers (2), insbesondere einer horizontalen Unterfläche (2a) des Prüfkörpers (2) und einer darunter angeordneten Grundplatte (1) erstrecken.

3. Testvorrichtung nach einem der vorherigen Ansprüche, **dadurch gekennzeichnet, dass** der Prüfkörper (2) im Inneren verrippt ausgebildet ist und zumindest dessen obere Oberfläche nach außen gewölbt ist.

4. Testvorrichtung nach Anspruch 3, **dadurch gekennzeichnet, dass** die obere gewölbte, facettierte Oberfläche an ihrem äußeren Rand in mehrere, insbesondere mehr als 4 senkrechte Umfangsflächen (2c1, 2c2, 2c3,...) übergeht.

5. Testvorrichtung nach einem der vorherigen Ansprüche, **dadurch gekennzeichnet, dass** eines (6a) der drei Aufnahmeelemente (6a, 6b) auf der oberen Oberfläche des Prüfkörpers (2) angeordnet ist, insbesondere auf einer horizontal ausgerichteten Teilfläche (2b7) der facettierten Oberfläche.

6. Testvorrichtung nach Anspruch 5, **dadurch gekennzeichnet, dass** dieses eine Aufnahmeelement (6a) eine austauschbare Adapterplatte (7) umfasst, insbesondere zur Ermöglichung unterschiedlicher Montagehöhen eines Oberlenkers.

7. Testvorrichtung nach einem der vorherigen Ansprüche, **dadurch gekennzeichnet, dass** zwei (6b) der drei Aufnahmeelemente (6a, 6b), insbesondere welche einem Unterlenker zugeordnet sind, auf einer gemeinsamen senkrechten Umfangsfläche (2c1) angeordnet sind.

8. Testvorrichtung nach einem der vorherigen Ansprüche, **dadurch gekennzeichnet, dass** zwei (6b) der drei Aufnahmeelemente (6a, 6b), insbesondere welche einem Unterlenker zugeordnet sind, in Ihrem Abstand zueinander einstellbar sind, insbesondere dadurch, dass sie in einer gemeinsamen oder jeweils in einer, eine horizontale Verschiebung und Befestigung zulassenden Führungsschiene, insbesondere eine T-Nuten aufweisende Führungsschiene angeordnet sind.

9. Testvorrichtung nach einem der vorherigen Ansprüche, **dadurch gekennzeichnet, dass** die durch die mehr als 4 senkrechte Umfangsflächen (2c1, 2c2, 2c3,...) ausgebildete Gesamtumfangsfläche (2c) des Prüfkörpers (2) in zumindest einem Teilbereich (2c6,...,2c10/2c3,...2c7/2c11,...2c15) einen zum Prüfkörper facettiert konkaven Bereich ausbildet beidseits dem Anlenkstellen (5a) für in der Testvorrichtung zumindest im Wesentlichen horizontal ausgerichtete Haltestangen (5) und/oder Linearantriebe vorgesehen sind, insbesondere die sich im Betrieb der Vorrichtung zwischen jeweils einer Anlenkstelle (5a) und einer zum Prüfkörper (2) im Abstand angeordneten Haltesäule (4) erstrecken.

10. Testvorrichtung nach einem der vorherigen Ansprüche, **dadurch gekennzeichnet, dass** der Prüfkörper (2) bezüglich einer senkrecht orientierten Mittenebene spiegelsymmetrisch ausgebildet ist.

## Claims

1. Test device for axle-less attachments to be coupled to a three-point power lift, in particular agricultural attachments for tractors, which test device has a movable test body (2), with the movement of which it is possible to simulate the travel movements of a traction machine, in particular of a tractor, wherein the test body (2) has three mounting elements (6a, 6b) which are arranged in the geometrical configuration of a three-point power lift and to which an attachment which is to be tested can be fastened in a freely suspended fashion with a coupling region, in particular an A frame, which corresponds to a three-point power lift, and in the coupled state the test body (2) can be moved in a plurality of degrees of freedom by means of at least three actuators (3), **characterized in that** the test body (2) is formed by a hollow body formed by a multiplicity of more than six facet faces, which hollow body simulates a traction machine, wherein at least the surface of the test body (2) is curved and is formed from a plurality of facet faces (2b1, 2b2, 2b3, ...) which merge one into the other at angles greater than 90 degrees.

2. Test device according to Claim 1, **characterized in that** the test body (2) is supported by the at least three actuators (3) in the direction of gravity, in particular wherein the actuators (3) are formed by hydraulic, pneumatic or electric linear motors (3) which are oriented in the vertical direction and which extend between an underlying surface (2a) of the test body (2), in particular a horizontal underlying surface (2a) of the test body (2) and a baseplate (1) arranged under the latter.

3. Test device according to one of the preceding claims, **characterized in that** the test body (2) is embodied with ribs in the interior and at least its upper surface is curved outward.

4. Test device according to Claim 3, **characterized in that** the upper curved, faceted surface merges at its outer edge with a plurality of, in particular more than 4, perpendicular circumferential faces (2c1, 2c2, 2c3, ...).

5. Test device according to one of the preceding claims, **characterized in that** one (6a) of the three mounting elements (6a, 6b) is arranged on the upper surface of the test body (2), in particular on a horizontally oriented partial face (2b7) of the faceted surface.

6. Test device according to Claim 5, **characterized in that** this one mounting element (6a) comprises an exchangeable adapter plate (7), in particular in order to permit different mounting heights of an upper link.

7. Test device according to one of the preceding claims, **characterized in that** two (6b) of the three mounting elements (6a, 6b), which are, in particular, assigned to a lower link, are arranged on a common perpendicular circumferential face (2c1).

8. Test device according to one of the preceding claims, **characterized in that** two (6b) of the three mounting elements (6a, 6b), which are, in particular, assigned to a lower link, can be adjusted in terms of their distance from one another, in particular **in that** they are arranged in a common guide rail or in each case in a guide rail which permits horizontal shifting and attachment, in particular a guide rail having T grooves.

9. Test device according to one of the preceding claims, **characterized in that** the overall circumferential face (2c) of the test body (2) which is formed by the more than 4 perpendicular circumferential faces (2c1, 2c2, 2c3...) forms, in at least one partial region (2c6, ... 2c10/2c3, ... 2c7/2c11,... 2c15), a concave region which is faceted with respect to the test body, on both sides of which concave region coupling points (5a) for securing rods (5) and/or linear drives which are oriented at least essentially horizontally in the test device are provided, in particular which securing rods (5) and/or linear drives extend during the operation of the device between in each case a coupling point (5a) and a securing pillar (4) which is arranged at a distance from the test body (2).

10. Test device according to one of the preceding claims, **characterized in that** the test body (2) is embodied in a mirror-symmetrical manner with respect to a centre plane which is oriented perpendicularly.

## Revendications

1. Ensemble de test pour appareils de montage sans essieu à suspendre sur des dispositifs dynamiques de relèvement à trois points, en particulier pour appareils agricoles à monter sur tracteur,
l'ensemble de test présentant un corps mobile de vérification (2) dont le déplacement permet de simuler les déplacements de roulage d'une machine de traction et en particulier d'un tracteur,
le corps de vérification (2) présentant trois éléments de réception (6a, 6b) disposés dans la configuration géométrique d'un dispositif de relèvement dynamique à trois points et sur lesquels un appareil de montage à tester peut être fixé en suspension libre sur une partie d'accouplement correspondant à un dispositif dynamique de relèvement à trois points, en particulier un bâti A,
le corps de vérification (2) pouvant, une fois suspendu, être déplacé avec plusieurs degrés de liberté par au moins trois actionneurs (3), **caractérisé en ce que**
le corps de vérification (2) est formé d'un corps creux constitué de plusieurs surfaces à plus de six facettes qui simulent une machine de traction, au moins la surface du corps de vérification (2) étant bombée et formée de plusieurs surfaces de facettes (2b1, 2b2, 2b3, ...) qui se prolongent les unes dans les autres sous des angles supérieurs à 90 degrés.

2. Ensemble de test selon la revendication 1, **caractérisé en ce que** le corps de vérification (2) est soutenu par les trois ou plusieurs actionneurs (3) dans la direction d'action de la gravité, les actionneurs (3) étant en particulier formés par des moteurs linéaires (3), hydrauliques, pneumatiques ou électriques, orientés dans la direction verticale, qui s'étendent entre une surface inférieure (2a) du corps de vérification (2), en particulier une surface inférieure horizontale (2a) du corps de vérification (2), et une plaque de base (1) située en dessous.

3. Ensemble de test selon l'une des revendications précédentes, **caractérisé en ce que** le corps de vérification (2) est nervuré à l'intérieur et **en ce qu'**au moins sa surface supérieure est bombée vers l'extérieur.

4. Ensemble de test selon la revendication 3, **caractérisé en ce que** la surface supérieure bombée et à facettes se prolonge sur son bord extérieur en plusieurs et en particulier en plus de 4 surfaces périphériques verticales (2c1, 2c2, 2c3, ...).

5. Ensemble de test selon l'une des revendications précédentes, **caractérisé en ce que** l'un (6a) des trois éléments de réception (6a, 6b) est disposé sur la surface supérieure du corps de vérification (2) et en particulier sur une surface partielle (2b7), orientée à l'horizontale, de la surface à facettes.

6. Ensemble de test selon la revendication 5, **caractérisé en ce qu'**il comporte un élément de réception (6a), à savoir une plaque d'adaptation remplaçable (7), qui permet en particulier de monter à différentes hauteurs un bras supérieur.

7. Ensemble de test selon l'une des revendications précédentes, **caractérisé en ce que** deux (6b) des trois éléments de réception (6a, 6b), en particulier associés à un bras inférieur, sont disposés sur une surface périphérique verticale commune (2c1).

8. Ensemble de test selon l'une des revendications précédentes, **caractérisé en ce que** deux (6b) des trois éléments de réception (6a, 6b), en particulier associés à un bras inférieur, peuvent avoir leur distance mutuelle ajustée, en particulier en étant disposés dans un rail de guidage commun ou chacune dans un rail de guidage qui permet un déplacement horizontal et une fixation, en particulier un rail de guidage présentant des rainures en T.

9. Ensemble de test selon l'une des revendications précédentes, **caractérisé en ce que** la surface périphérique totale (2c) du corps de vérification (2), formée de plus de 4 surfaces périphériques verticales (2c1, 2c2, 2c3, ...) forme au moins dans une partie (2c6, ..., 2c10/2c3, ... 2c7/2c11, ... 2c15) une partie à facettes, concave par rapport au corps de vérification, des deux côtés des emplacements d'articulation (5a) pour des tiges de maintien (5) alignés au moins essentiellement à l'horizontale dans l'ensemble de test et/ou des entraînements linéaires sont prévus, en particulier qui s'étendent, lorsque le dispositif est en fonctionnement, entre un emplacement d'articulation (5a) et une colonne de maintien (4) disposée à distance du corps de vérification (2).

10. Ensemble de test selon l'une des revendications précédentes, **caractérisé en ce que** le corps de vérification (2) est configuré à symétrie spéculaire par rapport à un plan central orienté à la verticale.
